# EUROPEAN PATENT SPECIFICATION

(11) **EP 3 832 019 B1**
(45) Date of publication and mention of the grant of the patent: **30.08.2023**
(21) Application number: 19844731.0
(22) Date of filing: 02.08.2019
(51) Int. Cl.: E01C 19/48, G05D 1/02, G06T 1/00, G06T 7/00, G01B 11/02, G01B 11/25, G01S 15/93, G08G 1/16

(54) **ASPHALT FINISHER AND ASPHALT FINISHER MONITORING SYSTEM**
ASPHALTFERTIGER UND ASPHALTFERTIGERÜBERWACHUNGSSYSTEM
FINISSEUSE D'ASPHALTE ET SYSTÈME DE SURVEILLANCE DE FINISSEUSE D'ASPHALTE

(30) Priority: 03.08.2018 JP 2018146898
(43) Date of publication of application: 09.06.2021
(73) Proprietor: Sumitomo (S.H.I.) Construction Machinery Co., Ltd., Shinagawa-ku Tokyo 141-6025 (JP)
(72) Inventor: SAKAKIBARA, Akira, Chiba-shi, Chiba 263-0001 (JP); BABA, Nobuyuki, Chiba-shi, Chiba 263-0001 (JP)
(74) Representative: Louis Pöhlau Lohrentz
(86) International application number: PCT/JP2019/030418
(87) International publication number: WO 2020/027314

(56) References cited:
- EP-A1- 2 918 726
- JP-A- 2014 105 434
- JP-A- 2018 190 228
- JP-B2- H02 483
- JP-B2- 5 980 105
- JP-U- H04 122 709
- US-A1- 2013 076 101

## Description

### [Technical Field]

The present invention relates to an asphalt finisher and a monitoring system for an asphalt finisher.

### [Background Art]

Conventionally, an asphalt finisher with a camera for imaging the inside of a hopper are known (see Patent Document 1).

The asphalt finisher is configured to perform image processing on an image taken by a camera to sense a person inside a hopper.

Furthermore, Patent Document 2 discloses an apparatus that generates an output image based on input images captured by multiple cameras mounted on an asphalt finisher.

Patent Document 3 discloses a method for distance measurement between a transport device and a milling device.

### [Prior art documents]

### [Patent Document]

[Patent Document 1]
   Japanese Pat. No. 5980105
[Patent Document 2]
   European Patent Application EP 2 918 726 A1
[Patent Document 3]
   U.S. Patent Application US 2013/076101 A1

### [Summary of Invention]

### [Problem to be solved by the invention]

However, the aforementioned asphalt finisher is not configured to monitor a paving material truck, such as a dump truck, that supplies paving material (e.g., asphalt composite) to the hopper.

Therefore, there is a risk that it may not be possible to communicate to concerned parties, such as an asphalt finisher operator or dump truck driver, information concerning safety when the asphalt finisher and a dump truck work together, for example, when paving material is fed to the hopper from a loading platform of the dump truck.

Therefore, it is desirable to provide an asphalt finisher that can more reliably communicate information concerning the safety on collaboration between the asphalt finisher and a paving material truck to the concerned parties.

### [Means for Solving Problems]

The asphalt finisher according to an embodiment of the present invention includes an alarm device, an information acquisition device for acquiring information about an object present in a surrounding area of a body of the asphalt finisher, a control device for controlling the alarm device based on information about an object acquired by the information acquisition device, the control device being configured to sense an obstacle present in the travelling direction of the body at a predetermined height higher than a predetermined height, sense a pavement material truck present in the travelling direction of the body, and control the alarm device based on a positional relationship between the obstacle and the paving material truck.

### [Effects of the Invention]

The means described above provide an asphalt finisher that can more reliably communicate safety information to the parties involved in the collaboration between the asphalt finisher and the paving material truck.

### [Brief Description of Drawings]

FIG. 1A is a left side view of an asphalt finisher.
FIG. 1B is a top view of the asphalt finisher.
FIG. 1C is a back view of the asphalt finisher.
FIG. 2 is a view illustrating a configuration example of a forward monitoring system mounted on the asphalt finisher.
FIG. 3 is a flowchart illustrating an example of alarm processing.
FIG. 4A illustrates a condition of a surrounding area of the asphalt finisher.
FIG. 4B illustrates the condition of the surrounding area of the asphalt finisher.
FIG. 4C illustrates the condition of the surrounding area of the asphalt finisher.
FIG. 4D illustrates the condition of the surrounding area of the asphalt finisher.
FIG. 5 is a flowchart illustrating another example of alarm processing.
FIG. 6 illustrates an example of a forward image.
FIG. 7A is a diagram illustrating a condition around the asphalt finisher.
FIG. 7B is a diagram illustrating the condition around the asphalt finisher.
FIG. 7C is a diagram illustrating the condition around the asphalt finisher.
FIG. 7D is a diagram illustrating the condition around the asphalt finisher.
FIG. 8 is a diagram illustrating the condition around the asphalt finisher.

### [Mode for Carrying Out the Invention]

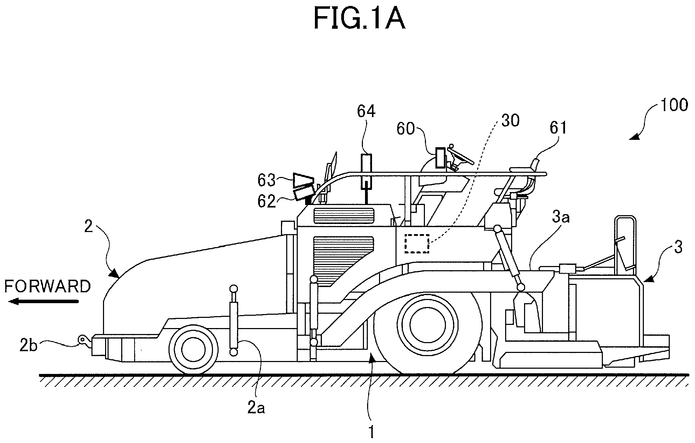

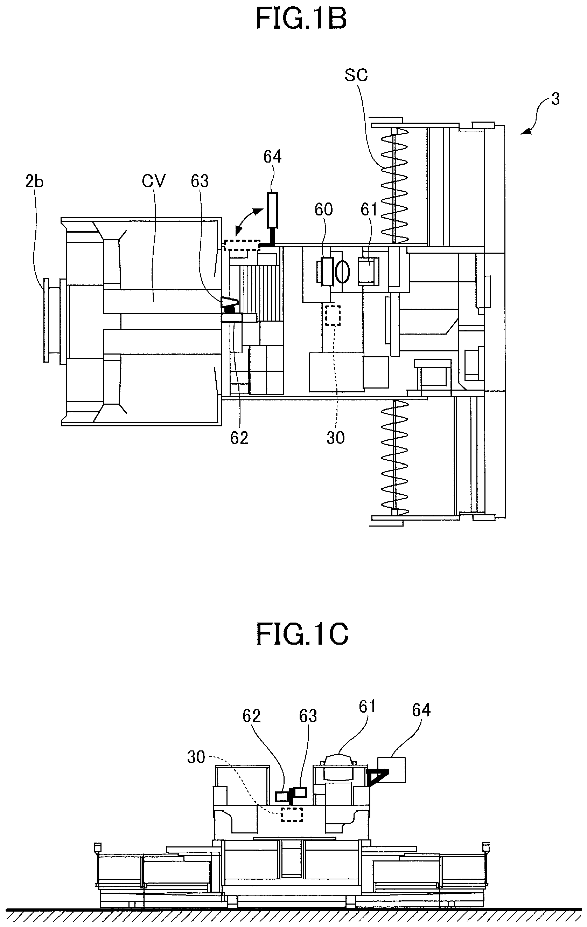

FIGS. 1A-1C are diagrams of an asphalt finisher 100, which is an example of a road machine according to an embodiment of the present invention. Specifically, FIG. 1A is a left side view of the asphalt finisher 100, FIG. 1B is a top view of the asphalt finisher 100, and FIG. 1C is a back view of the asphalt finisher 100.

The asphalt finisher 100 mainly includes a tractor 1, a hopper 2, and a screed 3.

The tractor 1 is a mechanism for driving the asphalt finisher 100. In this embodiment, the tractor 1 uses a running hydraulic motor to rotate the front and rear wheels to travel the asphalt finisher 100. The driving hydraulic motor receives a hydraulic oil from a hydraulic source and rotates. Front and rear wheels may be replaced by crawlers.

The tractor 1 includes a controller 30, a main monitor 60, a driver's seat 61, an information acquisition device 62, a sound output device 63, and an indicator 64. Specifically, a cab including the main monitor 60 and the driver's seat 61 is located at a rear portion of an upper surface of the tractor 1, the information acquisition device 62 and the sound output device 63 are located at a middle portion of a front end on the upper surface of the tractor 1, and the indicator 64 is located at a right side portion of the tractor 1. The indicator 64 is mounted so as to extend laterally to the tractor 1 for easy visibility by the driver of the dump truck. The indicator 64 may be located on the left side portion of the tractor 1 or both the right side portion and left side portion of the tractor 1.

The hopper 2 is a mechanism for receiving the paving material. In this embodiment, the hopper 2 is configured to be opened and closed by a hopper cylinder 2 in a vehicle width direction. The asphalt finisher 100 typically receives the paving material from the dump truck bed with the hopper 2 fully open. When the paving material is received from the loading platform of the dump truck, the asphalt finisher 100 continues to be driven (constructed) while pushing the dump truck forward through a push roller 2b.
The paving material received in the hopper 2 is fed to the front side of screed 3 using conveyor CV and screw SC.

The screed 3 is a mechanism for laying and extending the paving material. In this embodiment, the screed 3 is a floating screed towed by the tractor 1 and coupled to the tractor 1 via a leveling arm 3a.

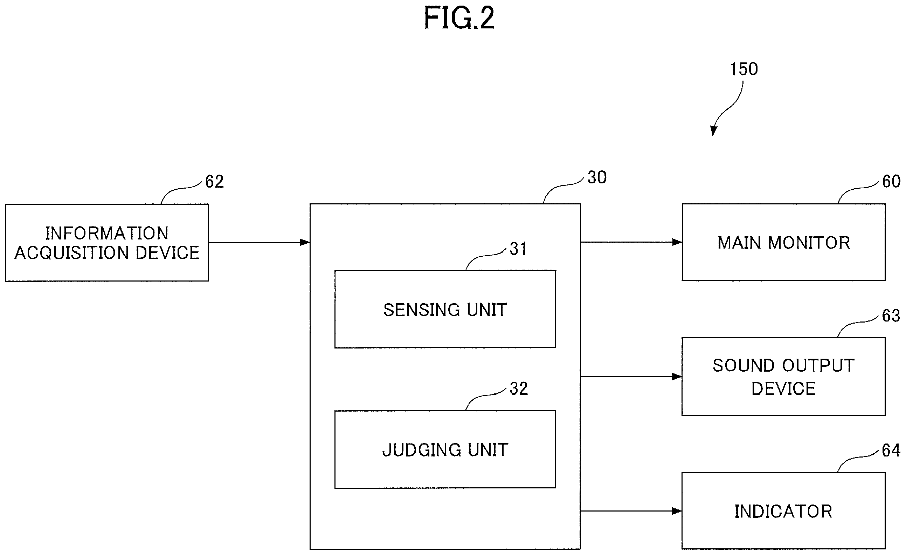

FIG. 2 is a schematic diagram illustrating an exemplary configuration of a monitoring system (a forward monitoring system 150) mounted on the asphalt finisher 100.

The forward monitoring system 150 monitors the front side of the asphalt finisher 100. In this embodiment, the forward monitoring system 150 mainly includes a controller 30, a main monitor 60, an information acquisition device 62, a sound output device 63, and an indicator 64.

The controller 30 is a control device that controls the forward monitoring system 150. In this embodiment, the controller 30 includes an arithmetic processing device including a CPU, a volatile storage device, and a non-volatile storage device, and is mounted on the tractor 1. The various functional elements of the controller 30 including the sensing unit 31 and the determining unit 32 are substantialized by executing a program stored in the non-volatile storage device by the CPU.

The main monitor 60 is an example of an alarm device and is configured to display various information. In this embodiment, the main monitor 60 is a liquid crystal display, and various kinds of information can be displayed in accordance with a control command from the controller 30. The main monitor 60 may also include an input device, such as a touch panel, for receiving an operation input from a driver of the asphalt finisher 100.

The information acquisition device 62 is configured to acquire information about an object present around the asphalt finisher 100. The information acquisition device 62 includes, for example, at least one of a monocular camera, a stereo camera, a distance image camera, an infrared camera, a distance sensor, and a LIDAR. The distance sensor includes, for example, at least one of a milliwave radar, a laser radar, an ultrasonic sensor, and an infrared sensor. In this embodiment, the information acquisition device 62 is a monocular camera that acquires an image of the space in front of the asphalt finisher 100. The information acquisition device 62 outputs the acquired image to the controller 30.

A sound output device 63 is another example of an alarm device and is configured to output sound toward a surrounding area of the asphalt finisher 100. In this embodiment, the sound output device 63 is a speaker that outputs sound in front of the asphalt finisher 100 and can output alarm sound in response to a control command from the controller 30.
The sound output device 63 may output an audio message.

The indicator 64 is another example of the alarm device and is a display device having a display portion facing the front of asphalt finisher 100. In this embodiment, the indicator 64 is mounted on the tractor 1. Specifically, the indicator 64 is positioned above the top surface of the tractor 1. The indicator 64 is an LED panel that can display various information in response to a control command from the controller 30. The indicator 64 may, for example, indicate a reverse instruction to a driver of a dump truck loaded with paving material and inform the driver of the possibility of reversing the dump truck.

In this embodiment, the indicator 64 is deployable so as to extend outwardly from the right side portion of the tractor 1 during use, as illustrated in FIG. 1B. The indicator 64 is also foldably configured to fit within the width of the asphalt finisher 100 when the asphalt finisher 100 is not in use, as illustrated by a broken line in FIG. 1B.

The sensing unit 31 is configured to sense an object based on the information acquired by the information acquisition device 62. In this embodiment, a predetermined image processing is applied to an image (hereinafter, referred to as a "forward image") acquired by a monocular camera as the information acquisition device 62, and the paving material truck, such as an obstacle (hereinafter, referred to as a "high-place obstacle") located at a position higher than a predetermined height present in the travelling direction of the tractor 1, and a dump truck present in the travelling direction of the tractor 1, is sensed. The predetermined height is, for example, 3.8 meters, as defined by the Vehicles Regulations Order, as the maximum height of vehicles passing through roads. The high-place obstacle includes, for example, bridges (bridges over roads), road signs, traffic lights, street trees, or electric wires. A predetermined image processing includes image processing using, for example, HOG feature quantities or SIFT feature quantities. The sensing unit 31 may be configured to identify the type of obstacle. In this case, the type of obstacle is a bridge (bridge over a road), road sign, signal, street tree, electric wire or the like. The sensing unit 31 may also be configured to specify the type of paving material truck. In this case, the type of paving material truck is a heavy-duty dump truck, medium-duty dump truck, or the like. When the type of paving material truck is specified, the sensing unit 31 can derive the height of the loading platform when the loading platform of the paving material truck is tilted based on the specifying result. The "loading platform height" is, for example, the height of the top end of the loading platform when the loading platform is tilted to its maximum extent. In this embodiment, the non-volatile storage device of the controller 30 stores a reference table defining a relationship between the type of paving material truck and the height of the loading platform. The sensing unit 31 may be configured to calculate the height of the obstacle based on the height of the road surface at the position of the obstacle acquired by the information acquisition device 62. The high-place obstacle 300 is positioned at a predetermined height from the road surface. In this case, the sensing unit 31 can calculate the height of the high-place obstacle 300 by adding a predetermined height (for example, 5 meters in the case of a signal) to the road surface height if the height of the road directly beneath the high-place obstacle 300 can be obtained. The sensing unit 31 may be configured to calculate the height relative to the paving material truck based on the road surface height at the position of the paving material truck acquired by the information acquisition device 62. The height for the paving material truck is, for example, the height of the loading platform. This is because the height of the loading platform of the paving material truck is uniquely determined when the road surface height is determined. In this case, if the height of the road directly beneath the paving material truck can be obtained, the sensing unit 31 can calculate the height of the loading platform by adding a predetermined height to the road surface height.

The sensing unit 31 may sense the high-place obstacle and the paving material truck based on outputs of a plurality of information acquisition devices 62. The sensing unit 31 may, for example, sense a high-place obstacle based on an output of one of a plurality of information acquisition devices 62 and sense a dump track based on the output of another one of the plurality of information acquisition devices 62.

The sensing unit 31 may specify the distance between each of the sensed high-place obstacle and paving material truck and the information acquisition device 62. For example, the sensing unit 31 may specify the distance between each of the sensed high-place obstacle and dump truck and the information acquisition device 62. This distance is desirably the distance in the travelling direction of the asphalt finisher 100, typically the horizontal distance.

The sensing unit 31 may locate each of the sensed heights obstacles and dump trucks.
For example, the sensing unit 31 may specify the position coordinates of each of the high-place obstacle and the dump truck in the reference coordinate system.
The reference coordinate system is, for example, a world geodetic system. The world geodetic system is a three-dimensional orthogonal XYZ coordinate system with its origin at the center of earth's gravity, its X-axis in the direction of the intersection of the Greenwich meridian and equator, its Y-axis in the direction of 90 degrees east longitude, and its Z-axis in the direction of the Arctic. In this case, the sensing unit 31 applies predetermined image processing to a forward image to derive the distance from the information acquisition device 62 to each of the high-place obstacle and dump truck and the orientation of the high-place obstacle and the dump truck viewed from the information acquisition device 62. The same applies when devices other than a monocular camera, such as a LIDAR or distance sensor, are used as the information acquisition device 62. Then, the sensing unit 31 may determine the current position of a positioning device (e.g., a GNSS receiver) not shown mounted on the asphalt finisher 100, the relative position of the information acquisition device 62 relative to the positioning device, and the respective position coordinates of the high-place obstacle and the dump track in the reference coordinate system.
In this case, the relative position of the information acquisition device 62 relative to the positioning device is known.

The sensing unit 31 may utilize road design data stored in the non-volatile storage device in specifying the position coordinates of each of the high-place obstacle and dump truck in the reference coordinate system. The road design data are design data for paved roads, including information of locations of signals, poles, manholes, and the like.

The judging unit 32 determines whether to cause an alarm to be output based on the positional relationship between the sensed high-place obstacle and the paving material truck. In this embodiment, the judging unit 32 controls the alarm device based on the positional relationship between the high-place obstacle and the dump truck. Specifically, the judging unit 32 outputs a control command to the alarm device and outputs an alarm from the alarm device when the positional relationship between the high-place obstacle and the dump truck satisfies a predetermined condition.

"A case where the positional relationship between the high-place obstacle and the dump truck satisfies the predetermined conditions" includes, for example, a case where the dump truck is directly beneath the high-place obstacle, or a case where the dump truck is presumed to be present directly beneath the high-place obstacle.

If the forward image includes an image of the high-place obstacle and an image of the dump truck, the sensing unit 31 does not need to specify a location of each of the high-place obstacle and dump truck. The sensing unit 31 can determine whether the dump truck is located immediately below the high-place obstacle by applying a predetermined image processing to the forward image.

On the other hand, when the image of an already sensed obstacle is not included in the forward image, for example, when the image of the obstacle is hidden behind the image of the dump truck, or when the obstacle that is approaching the monocular camera is out of the imaging range of the monocular camera, the sensing unit 31 estimates the position of the high-place obstacle. This is to estimate whether the dump truck is located immediately below the obstacle. For example, the sensing unit 31 estimates the current position of the high-place obstacle based on the position of the high-place obstacle specified when the high-place obstacle can be sensed and the subsequent travel distance of the asphalt finisher 100. The travel distance of the asphalt finisher 100 is calculated based on at least one output, e.g., a positioning device and a wheel speed sensor. If the output of the wheel speed sensor is utilized, the output if the steering angle sensor may additionally be utilized.

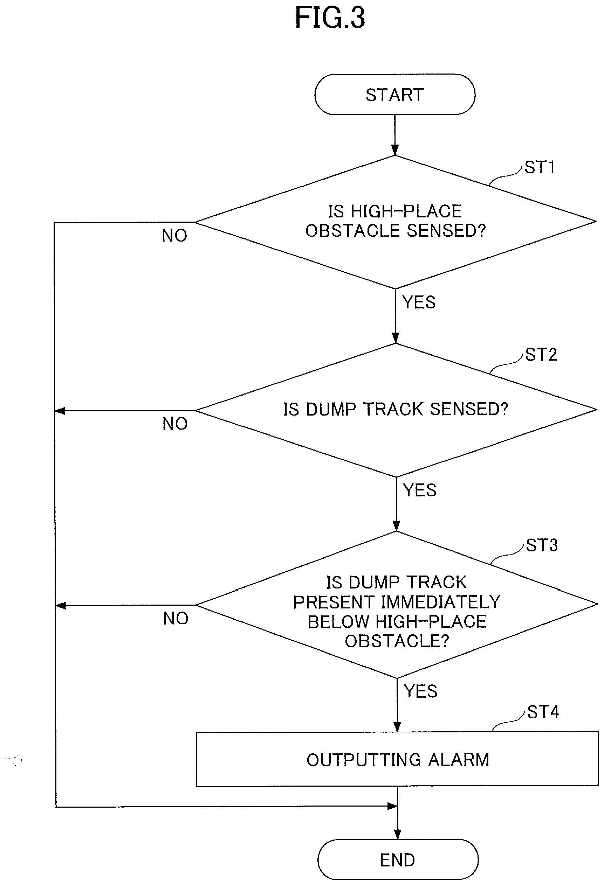

Referring to FIG. 3, an example of a process in which the controller 30 controls the alarm device based on a positional relationship between the high-place obstacle and the paving material truck (hereinafter, referred to as "alarm processing") will be described. FIG. 3 is a flowchart illustrating an example of the alarm processing. The controller 30 repeatedly performs this alarm processing with a predetermined control cycle when the asphalt finisher 100 travels.

Initially, the controller 30 determines whether the high-place obstacle has been sensed (step ST1). In this embodiment, the sensing unit 31 of the controller 30 performs predetermined image processing on the forward image acquired by the monocular camera as the information acquisition device 62 to sense the image of the high-place obstacle. The controller 30 determines that the high-place obstacle is sensed when the sensing unit 31 detects the image of the high-place obstacle.

When it is determined that the high-place obstacle has been sensed (YES in step ST1), the controller 30 determines whether the dump truck has been sensed (step ST2). In this embodiment, the sensing unit 31 performs predetermined image processing on the forward image acquired by the monocular camera as the information acquisition device 62 and senses the image of the dump truck in the same manner as when the image of the high-place obstacle is sensed. The dump truck image is typically the backside image of the dump truck. The controller 30 determines that the dump truck is sensed when the image of the dump truck is sensed by the sensing unit 31.

When it is determined that the dump truck is sensed (YES in step ST2), the controller 30 determines whether the dump truck is located immediately underneath the high-place obstacle (step ST3). In this embodiment, the sensing unit 31 specifies the horizontal distance between each of the sensed high-place obstacle and dump truck and the information acquisition device 62. The judging unit 32 of the controller 30 determines whether the dump truck is located immediately underneath the vertical obstacle based on the horizontal distance between the high-place obstacle and the information acquisition device 62, the horizontal distance between the dump truck and the information acquisition device 62, and the known length of the dump truck.

If it is determined that the dump truck is located immediately underneath the high-place obstacle (YES in step ST3), the controller 30 outputs an alarm (step ST4). In this embodiment, the judging unit 32 of the controller 30 outputs a control command to the sound output device 63 as the alarm device and outputs an audio message from the sound output device 63. The audio message is, for example, "A high-place obstacle is present immediately above". For example, the controller 30 may determine that the dump truck is located immediately underneath the high-place obstacle when the horizontal distance between the high-place obstacle and the information acquisition device 62 is not less than the horizontal distance between the dump truck and the information acquisition device 62 and not more than the horizontal distance between the dump truck and the information acquisition device 62 plus the length of the dump truck.

When it is determined that the high-place obstacle is not sensed (NO in step ST1), it is determined that the dump truck is not sensed (NO in step ST2), or it is determined that the dump truck is not located immediately the high-place obstacle (NO in Step ST3), the controller 30 terminates the alarm processing without outputting an alarm.

With this configuration, the controller 30 can inform the driver of the dump truck and the concerned person, including the driver of the asphalt finisher 100, of any obstacles present directly above the dump truck.

As a result, the controller 30 can more reliably prevent the driver of the dump truck from tilting the loading platform of the dump truck without noticing the presence of the high-place obstacle and causing the platform to come into contact with the high-place obstacle.

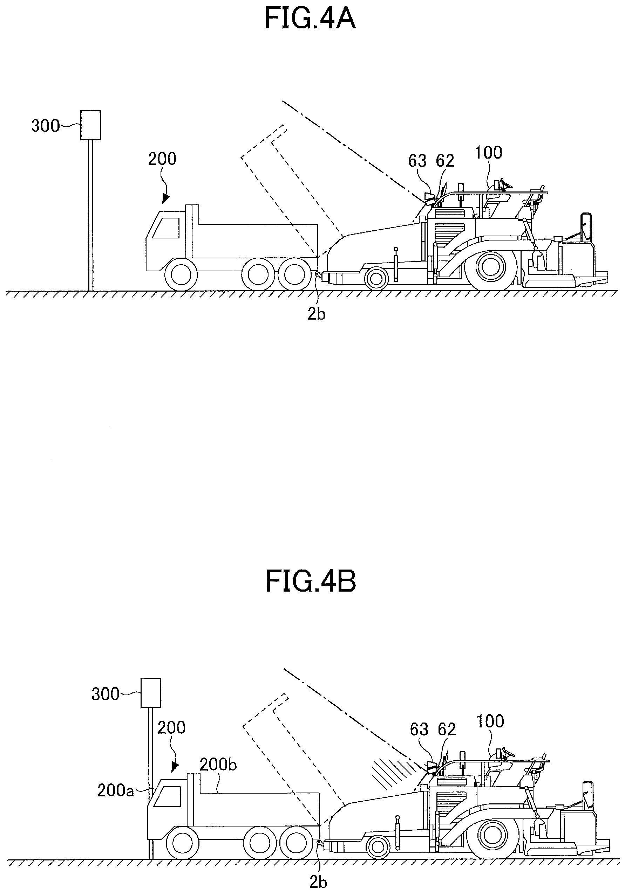

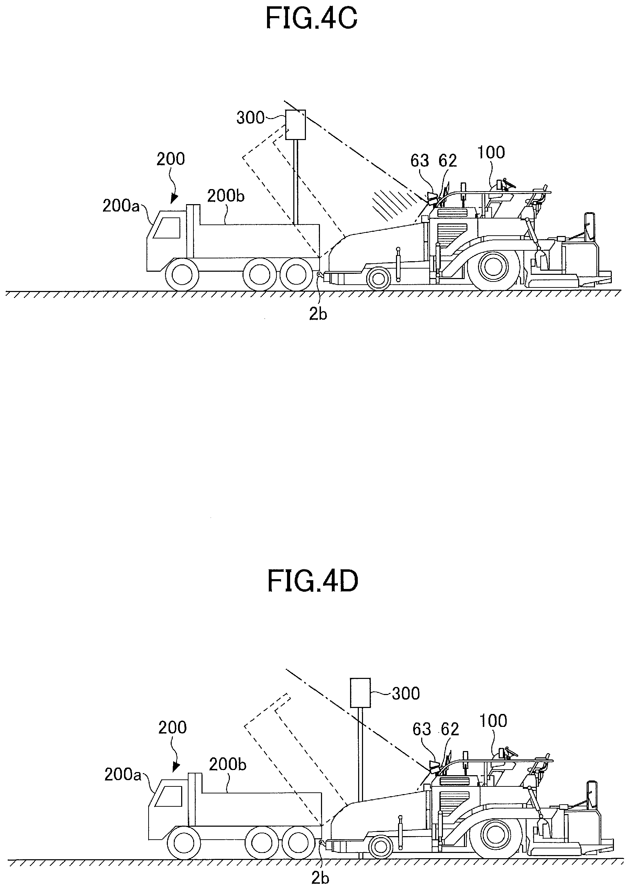

Referring to FIGS. 4A-4D, the corresponding relationship between the positional relationship of the asphalt finisher 100, dump track 200, and high-place obstacle 300 and the necessity of the alarm will now be described. FIGS. 4A-4D are side views of the asphalt finisher 100, the dump truck 200, and the high-place obstacle 300. The high-place obstacle 300 is, for example, a signal installed at a height of about 5 meters from the ground surface. The dashed-dotted line in FIGS. 4A-4D represents an imaging range of the monocular camera as the information acquisition device 62. The broken line in FIGS. 4A-4D represents the loading platform 200b when the loading platform 200b of the dump truck 200 is maximally tilted. The driver of the dump truck 200 operates to maximally tilt the loading platform 200b to feed all of the paving material loaded on the loading platform 200b onto the hopper 2. In this embodiment, the upper end of the loading platform 200b when the loading platform 200b is maximally tilted reaches a height of about 6.3 meters from the ground. A shaded portion in the sector shape illustrated in FIGS. 4B and 4C represents the sound output by a sound output device 63 as the alarm device. In FIGS. 4A-4D, a push roller 2b of the asphalt finisher 100 is in contact with a rear wheel of the dump truck 200. The asphalt finisher 100 travels forward while pressing the dump track 200.

In FIG. 4A, the information acquisition device 62 includes the dump track 200 and high-place obstacle 300 in an imaging range. In this case, the controller 30 can determine the horizontal distance between the information acquisition device 62 and each of the dump track 200 and high-place obstacle 300 by performing predetermined image processing on the forward image, and can recognize that the dump track 200 is not immediately beneath the high-place obstacle 300. Specifically, the controller 30 can recognize that the high-place obstacle 300 is located farther from the asphalt finisher 100 than the dump truck 200, and that the loading platform 200b and the high-place obstacle 300 do not come into contact even though the loading platform 200b of the dump truck 200 is tilted to the maximum extent. Therefore, the controller 30 does not cause an alarm to be output.

Also, in FIG. 4B, the imaging range of the information acquisition device 62 includes the dump track 200 and the high-place obstacle 300. In this case, the controller 30 can determine the horizontal distance between the information acquisition device 62 and each of the dump track 200 and high-place obstacle 300 by performing predetermined image processing on the forward image and recognizing that the dump track 200 is located immediately below the high-place obstacle 300. Specifically, the controller 30 can recognize that although the high-place obstacle 300 is located immediately above the driver's compartment 200a of the dump truck 200, the loading platform 200b and the high-place obstacle 300 do not come into contact even though the loading platform 200b of the dump truck 200 is tilted to the maximum extent. In this embodiment, even with such the positional relationship, the controller 30 outputs the alarm. If the dump truck 200 travels forward while the loading platform 200b is maximally tilted, it is likely that the loading platform 200b will come into contact with the high-place obstacle. The alarm may be, for example, an audio message such as "A signal is located immediately above the driver's compartment".

Also, in FIG. 4C, the information acquisition device 62 includes the dump track 200 and the high-place obstacle 300 in the imaging range. In this case, the controller 30 can determine the horizontal distance between the information acquisition device 62 and each of the dump track 200 and high-place obstacle 300 by performing predetermined image processing on the forward image and recognizing that the dump track 200 is located immediately below the high-place obstacle 300. Specifically, the controller 30 may recognize that the high-place obstacle 300 contacts the loading platform 200b when the high-place obstacle 300 is located immediately above the loading platform 200b of the dump truck 200 and the loading platform 200b is maximally tilted. Therefore, the controller 30 outputs the alarm. The controller 30 may output the alarm that is different from the alarm output when the positional relationship is as illustrated in FIG. 4B. The alarm may be, for example, an audio message such as "Do not tilt the loading platform".

In FIG. 4D, the information acquisition device 62 includes the dump track 200 within the imaging range, but does not include the high-place obstacle 300 within the imaging range. This is because the high-place obstacle 300 is located immediately above the asphalt finisher 100 and the high-place obstacle 300 is out of the imaging range. In this case, the controller 30 may estimate that the high-place obstacle 300 is located immediately above the asphalt finisher 100. Specifically, the controller 30 can estimate that the high-place obstacle 300 is not located immediately above the loading platform 200b of the dump truck 200, but is immediately directly above the asphalt finisher 100, and that the loading platform 200b does not come into contact with the high-place obstacle 300 even though the loading platform 200b is tilted to the maximum extent. Therefore, the controller 30 does not cause the alarm to be output.

Thus, the controller 30 can initiate an alarm output when the positional relationship illustrated in FIG. 4B is reached, and stop the alarm output when the positional relationship illustrated in FIG. 4D is obtained through the positional relationship illustrated in FIG. 4C. In addition, the content of the alarm may be changed when the positional relationship illustrated in FIG. 4C is obtained.

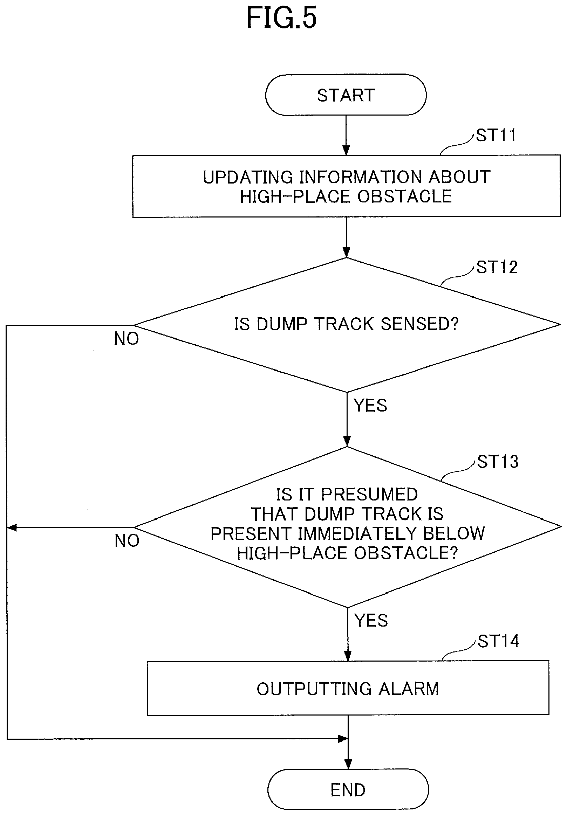

Next, another example of alarm processing will be described with reference to FIG. 5. FIG. 5 is another example of a flowchart of alarm processing. The controller 30 repeatedly performs this alarm process with a predetermined control cycle when the asphalt finisher 100 travels.

The alarm process of FIG. 5 allows the alarm device to output the alarm at an appropriate timing even when the image of the high-place obstacle 300 is hidden behind the image of the dump track 200.

Next, another example of alarm processing will be described with reference to FIG. 5 (step ST11). In this embodiment, when the image area of the monocular camera as the information acquisition device 62 includes the high-place obstacle 300, the controller 30 performs the predetermined image processing on the forward image to derive the horizontal distance between the high-place obstacle 300 and the information acquisition device 62. If, on the other hand, the image of the already sensed high-place obstacle 300 is no longer included in the forward image, the controller 30 estimates the current horizontal distance between the information acquisition device 62 and the high-place obstacle 300, for example, based on the previously derived horizontal distance. "A case where the image of an already sensed obstacle 300 is no longer included in the forward image" includes, for example, a case where the image of the high-place obstacle 300 is no longer visible behind the image of the dump track 200 or a case where the high-place obstacle 300 deviates from the imaging range of the monocular camera. Specifically, the controller 30 estimates the current horizontal distance between the information acquisition device 62 and the high-place obstacle 300 based on the horizontal distance between the high-place obstacle 300 and the information acquisition device 62 when the high-place obstacle 300 is sensed and the subsequent travel distance of the asphalt finisher 100.

Thereafter, the controller 30 determines whether the dump track 200 has been sensed (step ST12). In this embodiment, the sensing unit 31 of the controller 30 performs predetermined image processing on the forward image acquired by the monocular camera as the information acquisition device 62 to sense the image of the dump track 200. The controller 30 determines that the dump track 200 is sensed when an image of the dump track 200 is sensed by the sensing unit 31.

If it is determined that the dump track 200 is sensed (YES in step ST12), the controller 30 estimates whether the dump track 200 is immediately below the high-place obstacle 300 (step ST13). In this embodiment, the sensing unit 31 specifies a horizontal distance between the sensed dump track 200 and the information acquisition device 62. The judging unit 32 of the controller 30 estimates whether the dump track 200 is directly below the high-place obstacle 300 based on the horizontal distance between the high-place obstacle 300 and the information acquisition device 62, the horizontal distance between the dump track 200 and the information acquisition device 62, and the known length of the dump track 200. The horizontal distance between the high-place obstacle 300 and the information acquisition device 62 is the horizontal distance specified in step ST11 or estimated in step ST11.

If the dump track 200 is estimated to be located immediately below the high-place obstacle 300 (YES in step ST13), the controller 30 outputs the alarm (step ST14). In this embodiment, the judging unit 32 of the controller 30 outputs a control command to the sound output device 63 as the alarm device and outputs the audio message from the sound output device 63.

When it is determined that the dump track 200 is not sensed (NO in step ST12) or when it is estimated that the dump track 200 is not directly below the high-place obstacle 300 (NO in step ST13), the controller 30 terminates the alarm processing without causing the alarm to be output.

With this configuration, the controller 30 can inform concerned parties including the driver of the dump truck 200 and the asphalt finisher 100, if it can be assumed that there is the high-place obstacle 300 immediately above the dump truck 200, even if the image of the high-place obstacle 300 is hidden behind the image of the dump truck 200.

As a result, the controller 30 can more reliably prevent the driver of the dump truck 200 from being aware of the presence of the high-place obstacle and causing the loading platform 200b to come into contact with the high-place obstacle 300.

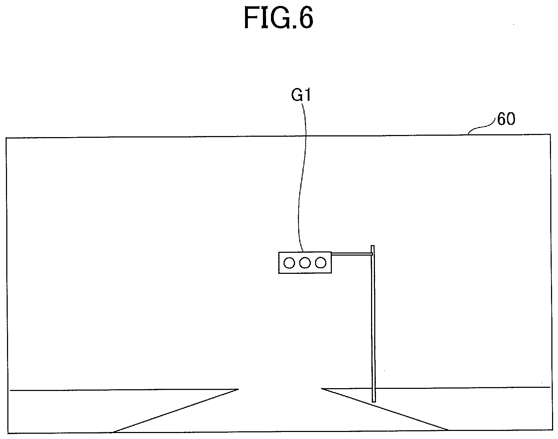

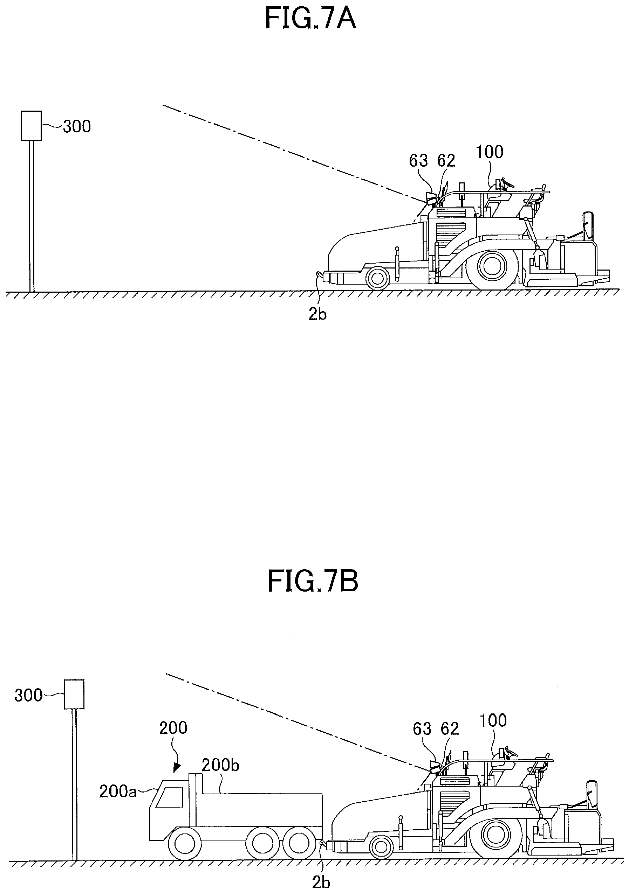

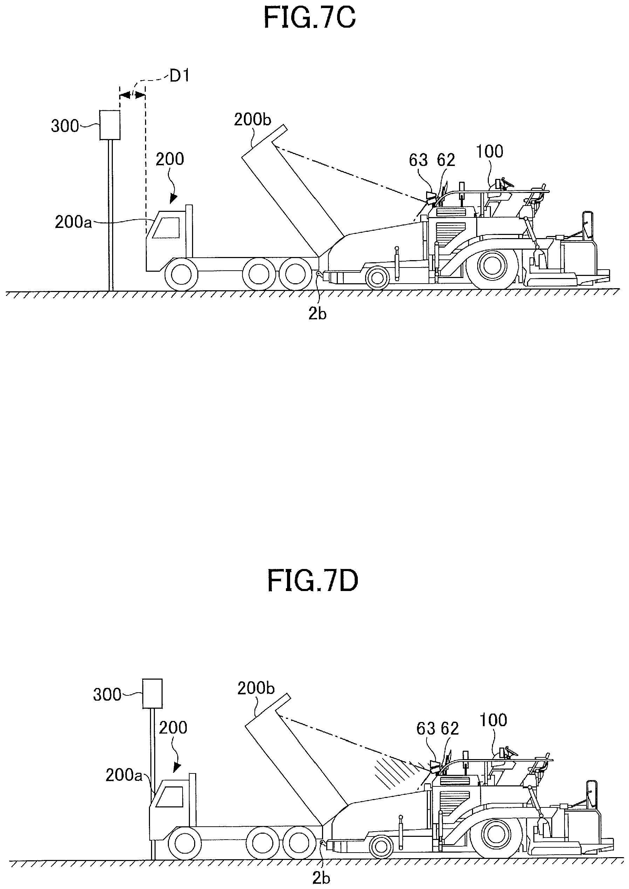

Referring now to FIGS. 6 and 7A-7D, the correspondence between the positional relationship of the asphalt finisher 100, the dump track 200, and the high-place obstacle 300 and the need for an alarm will be described. FIG. 6 is an example of the forward image displayed on the main monitor 60. The forward image illustrated in FIG. 6 includes an image G1 of the signal as a high-place obstacle 300. The signal is installed at a height of about 5 meters from the ground. FIGS. 7A-7D are side views of the asphalt finisher 100, the dump truck 200, and the high-place obstacle 300. The dashed-dotted line in FIGS. 7A-7D represents the imaging range of the monocular camera as the information acquisition device 62. The shaded portion in the sector shape illustrated in FIG. 7D represents the sound output by the sound output device 63 as an alarm device. In FIGS. 7B-7D, the push roller 2b of the asphalt finisher 100 is in contact with the rear wheels of the dump truck 200. The asphalt finisher 100 travels forward while pressing the dump track 200. Here, alignment positions (alignment coordinates) of the asphalt finisher 100, the dump track 200, and the high-place obstacle 300 are derived based on, for example, the output of a positioning device (e.g., a GNSS receiver) installed in the tractor 1. These alignment coordinates are the coordinates in the reference coordinate system used in the construction plan drawings, e.g., design data. The reference coordinate system is, for example, the world geodetic system. The world geodetic system is a three-dimensional orthogonal XYZ coordinate system with its origin at the center of earth's gravity, its X-axis in the direction of the intersection of the Greenwich meridian and equator, its Y-axis in the direction of 90 degrees east longitude, and its Z-axis in the direction of the Arctic.

In FIG. 7A, the information acquisition device 62 includes the high-place obstacle 300 within the imaging range. The forward image of FIG. 6 corresponds to an image acquired by the information acquisition device 62 in the state illustrated in FIG. 7A. In this case, the controller 30 can determine the horizontal distance between the information acquisition device 62 and the high-place obstacle 300 by performing predetermined image processing on the forward image. The controller 30 can store the specified horizontal distance and the specified time in a non-volatile storage device. Also, the controller 30 can recognize that the dump track 200 and the high-place obstacle 300 do not come into contact because the dump track 200 is not in front of the asphalt finisher 100, i.e., the controller 30 has identified the location of the high-place obstacle 300 before the dump track 200 enters within a predetermined distance. Therefore, the controller 30 does not cause the alarm to be output.

In FIG. 7B, the information acquisition device 62 includes a dump track 200 and the high-place obstacle 300 in the imaging range.
In this case, the controller 30 can determine the horizontal distance between the information acquisition device 62 and each of the dump track 200 and the high-place obstacle 300 by performing predetermined image processing on the forward image, and can recognize that the dump track 200 is not directly below the high point obstacle 300. Specifically, the controller 30 can recognize that the loading platform 200b does not contact the high-place obstacle 300 even though the loading platform 200b of the dump truck 200 is tilted to the maximum extent. Therefore, the controller 30 does not cause the alarm to be output. The controller 30 may store the specified horizontal distance and the specified time in the non-volatile storage device.

In FIG. 7C, the imaging range of the information acquisition device 62 includes the dump track 200 but does not include the high-place obstacle 300. This is because the image of the high-place obstacle 300 is hidden behind the image of the tilted loading platform 200b of the dump truck 200. In this case, the controller 30 estimates the current horizontal distance between the information acquisition device 62 and the high-place obstacle 300 based on, for example, the horizontal distance between the information acquisition device 62 and the high-place obstacle 300 when the high-place obstacle 300 is within the imaging range and the subsequent travel distance of the asphalt finisher 100. Specifically, the controller 30 estimates the current horizontal distance between the information acquisition device 62 and the high-place obstacle 300 based on the horizontal distance at a specified time stored in the non-volatile storage device and the travel distance of the asphalt finisher 100 after that specified time. Then, the controller 30 can specify the current horizontal distance between the information acquisition device 62 and the dump track 200 by performing predetermined image processing on the forward image and estimate that the dump track 200 is not directly below the high-place obstacle 300. Specifically, the controller 30 can assume from the asphalt finisher 100 that the high-place obstacle 300 is located farther in the travelling direction than the dump truck 200 and that the loading platform 200b does not come into contact with the high-place obstacle 300 even when the loading platform 200b is maximally tilted. Therefore, the controller 30 does not cause the alarm to be output. However, the controller 30 may cause the alarm to be output when the horizontal distance D1 between the dump track 200 and the high-place obstacle 300 falls below a predetermined value, even if the dump track 200 is not located immediately below the high-place obstacle 300. This is to inform the concerned person of a possibility that if the asphalt finisher 100 continues to travel, the loading platform 200b may come into contact with the high-place obstacle 300.

Even in FIG. 7D, the information acquisition device 62 includes the dump track 200 within the imaging range, but does not include the high-place obstacle 300 within the imaging range. In a manner similar to FIG. 7C, the image of the high-place obstacle 300 is hidden behind the image of the loading platform 200b of the dump truck 200. In this case, as in the case of FIG. 7C, the controller 30 can estimate the current horizontal distance between the information acquisition device 62 and the high-place obstacle 300 based on the horizontal distance between the information acquisition device 62 and the high-place obstacle 300 when the high-place obstacle 300 is included in the imaging range and the subsequent travel distance of the asphalt finisher 100. Then, the high-place obstacle 300 can be estimated immediately above the driver's compartment 200a of the dump truck 200. Therefore, the controller 30 outputs the alarm. This is to inform the concerned person that if the asphalt finisher 100 continues to travel, the loading platform 200b may come into contact with the high-place obstacle 300. In this case, the controller 30 may output the audio message such as, for example, "lower the loading platform".

Thus, the controller 30 starts to output the alarm when the horizontal distance D1 is below a predetermined value in the positional relationship illustrated in FIG. 7C or when the positional relationship illustrated in FIG. 7D is obtained. As a result, the controller 30 can reliably inform the concerned person that the loading platform 200b may come into contact with the high-place obstacle 300 as the asphalt finisher 100 continues to travel.

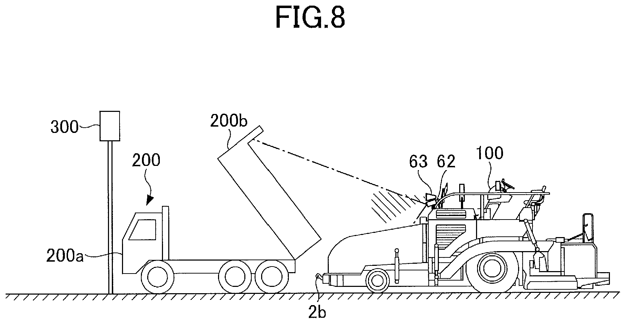

Referring now to FIG. 8, the corresponding relationship between the positional relationship of the asphalt finisher 100, dump track 200, and high-place obstacle 300 and the necessity of the alarm will now be described. FIG. 8 is a side view of the asphalt finisher 100, the dump truck 200, and the high-place obstacle 300 corresponding to FIG. 7D. The state illustrated in FIG. 8 differs from the state illustrated in FIG. 7D in that the dump truck 200 travels so as to be away from the asphalt finisher 100 while tilting the loading platform 200b. In FIG. 7D, the asphalt finisher 100 travels forward while pushing the dump truck 200 forward through the push roller 2b. That is, the dump track 200 is in contact with the asphalt finisher 100.

In FIG. 8, as in FIG. 7C, the information acquisition device 62 includes the dump track 200 within the imaging range, but does not include the high-place obstacle 300 within the imaging range. Because the image of the high-place obstacle 300 is hidden behind the image of the loading platform 200b of the dump truck 200. In this case, the controller 30 can estimate the current horizontal distance between the information acquisition device 62 and the high-place obstacle 300 based on the horizontal distance between the information acquisition device 62 and the high-place obstacle 300 when the imaging range includes the high-place obstacle 300 and the subsequent travel distance of the asphalt finisher 100. The controller 30 outputs an alarm when it detects that the dump track 200 is separated from the asphalt finisher 100 when the current horizontal distance between the information acquisition device 62 and the high-place obstacle 300 is less than a predetermined value. To inform the driver of the dump truck 200 that if the dump truck 200 advances forward without lowering the loading platform 200b, the loading platform 200b and the high-place obstacle 300 may come into contact. In this case, the controller 30 may output an audio message such as "Stop the dump track". To stop the dump truck 200 before the load platform 200b contacts the high-place obstacle 300.

In this manner, the controller 30 initiates an alarm output when the positional relationship is reached as illustrated in FIG. 8. As a result, the dump truck 200 can reliably inform the concerned person that the loading platform 200b may come into contact with the high-place obstacle 300 as it travels forward away from the asphalt finisher 100. The controller 30 can prevent the driver of the dump truck 200 from travelling the dump truck 200 without lowering the loading platform 200b, thereby causing the loading platform 200b to contact the high-place obstacle 300.

As described above, the asphalt finisher 100 according to the embodiment of the present embodiment includes the alarm device, an information acquisition device 62 for acquiring the information about the object present in the surrounding area of the asphalt finisher 100, and the controller 30 as a control device for controlling the alarm device based on information about the object acquired by the information acquisition device 62. The controller 30 is configured to sense the high-place obstacle 300 at a position higher than a predetermined height present in the travelling direction of the airframe, sense the dump truck 200 as a paving material truck present in the travelling direction of the airframe, and control the alarm device based on the positional relationship between the high-place obstacle 300 and the dump truck 200. The alarm device is at least one of the main monitor 60, the sound output device 63, and the indicator 64, for example.

With this configuration, the asphalt finisher 100 can more reliably communicate information about safety when the asphalt finisher 100 and the dump truck 200 work together.

The controller 30 may be configured to cause the alarm to be output from the alarm device, for example, when the dump track 200 is located immediately below the high-place obstacle 300.

With this configuration, the controller 30 can inform the driver of the dump truck 200 that, for example, there is the high-place obstacle 300 immediately above the loading platform 200b of the dump truck 200. As a result, the controller 30 can prevent the driver of the dump truck 200 from tilting the loading platform 200b without noticing the presence of the high-place obstacle 300.

The controller 30 may be configured to update the positional relationship between the high-place obstacle 300 and the dump track 200 as the tractor 1 travels. For example, if the image of the already sensed high-place obstacle 300 is no longer included in the forward image, the controller 30 may estimate the current horizontal distance between the information acquisition device 62 and the high-place obstacle 300 based on, for example, the horizontal distance between the information acquisition device 62 and the high-place obstacle 300 previously derived and the subsequent travel distance of the tractor 1.

With this configuration, the asphalt finisher 100 is able to output the alarm from the alarm device at an appropriate timing even if the image of the high-place obstacle 300 is hidden behind the image of the dump track 200.

The preferred embodiment of the present invention has been described in detail above. However, the invention is not limited to the embodiments described above. Various modifications, substitutions and the like may be applied to the embodiments described above without departing from the scope of the invention. Also, the features described separately may be combined unless there is a technical inconsistency.

For example, in the embodiment described above, the controller 30 estimates the current horizontal distance between the high-place obstacle 300 and the information acquisition device 62 based on the horizontal distance between the high-place obstacle 300 and the information acquisition device 62 specified at a first time point and the travel distance of the asphalt finisher 100 after the first time point, even though the current forward image does not include the image of the high-place obstacle 300. However, the controller 30 may acquire the current positional relationship between the dump track 200 and the high-place obstacle 300 based on the current position coordinates of the asphalt finisher 100 in the reference coordinate system and the position coordinate of the high-place obstacle 300 specified by the sensing unit 31 when the sensing unit 31 senses the high-place obstacle 300, even if the current high-place image does not include the image of the high-place obstacle 300.

The controller 30 may also be configured to output an audio message such as "Lower the loading platform" or "Don't tilt the loading platform" to avoid the contact between the loading platform 200b of the dump truck 200 and the high-place obstacle 300.

The controller 30 may also be configured to direct the timing of tilting the loading platform 200b in order to prevent a situation from occurring in which the loading platform 200b must be tilted at a time when the high-place obstacle 300 is positioned immediately above the dump truck 200. This situation can occur, for example, when the asphalt finisher 100 pushes the dump truck 200 to forward travel the dump truck and the dump truck 200 reaches immediately below the high-place obstacle 300 and the paving material in the hopper 2 runs short. The dump truck 200 avoids this situation by, for example, transferring all of the paving material on the loading platform 200b to the hopper 2 before reaching immediately below the high-place obstacle 300.

### [Description of Symbols]

1: tractor
2: hopper
2a: hopper cylinder
2b: push roller
3: screed
3a: leveling arm
30: controller
31: sensing unit
32: judging unit
60: main monitor
61: driver's seat
62: information acquisition device
63: sound output device
64: indicator
100: asphalt finisher
150: forward monitoring system
200: dump truck
200a: driver's compartment
200b: loading platform
300: high-place obstacle

## Claims

1. An asphalt finisher (100) comprising:
an alarm device (60, 63); and
an information acquisition device (62) for acquiring information about an object which is present in a surrounding area of a body of the asphalt finisher (100); and
a control device (30) for controlling the alarm device (60, 63) based on the information about the object acquired by the information acquisition device (62), wherein
the control device (30) is configured to sense an obstacle (300) located in a travelling direction of the body at a position higher than a predetermined height, sense a paving material truck (200) located in the travelling direction of the body,
and control the alarm device (60, 63) based on a positional relationship between the obstacle (300) and the paving material truck (200).

2. The asphalt finisher (100) according to claim 1, wherein
the control device (30) is configured to output an alarm from the alarm device (60, 63) in a case where the paving material truck (200) is located immediately underneath the obstacle (300).

3. The asphalt finisher (100) according to claim 1, wherein
the control device (30) is configured to update the positional relationship in response to travelling of the tractor (1) of the asphalt finisher (100).

4. The asphalt finisher (100) according to claim 1, wherein
the control device (30) specifies a location of the obstacle (300) before the paving material truck (200) enters within a predetermined distance.

5. The asphalt finisher (100) according to claim 1, wherein
the control device (30) specifies a type of the obstacle (300).

6. The asphalt finisher (100) according to claim 1, wherein
the control device (30) specifies a type of the paving material truck (200) and derives a height of the loading platform of the paving material truck (200) when the loading platform tilts.

7. The asphalt finisher (100) according to claim 6, wherein
the control device (30) stores a reference table defining a corresponding relationship between a type of the paving material truck (200) and a height of the loading platform when the loading platform tilts.

8. The asphalt finisher (100) according to claim 1, wherein
a control device (30) calculates a height of the obstacle (300) based on a road surface height at a position of the obstacle (300) acquired by the information acquisition device (62).

9. The asphalt finisher (100) according to claim 1, wherein
the control device (30) calculates a height of the paving material truck (200) based on a road surface height at a position of the paving material truck (200) acquired by the information acquisition device (62).

10. A monitoring system of an asphalt finisher (100) comprising:
an alarm device (60, 63); and
an information acquisition device (62) for acquiring information about an object which is present in a surrounding area of a body of the asphalt finisher (100); and
a control device (30) for controlling the alarm device (60, 63) based on the information about the object acquired by the information acquisition device (62), wherein
the control device (30) is configured to sense an obstacle (300) located in a travelling direction of the body at a position higher than a predetermined height, sense a paving material truck (200) located in the travelling direction of the body, and control the alarm device (60, 63) based on a positional relationship between the obstacle (300) and the paving material truck (200).

11. The monitoring system of the asphalt finisher (100) according to claim 10, wherein
the control device (30) is configured to output an alarm from the alarm device (60, 63) when the paving material truck (200) is located immediately underneath the obstacle (300).

12. The monitoring system of the asphalt finisher (100) according to claim 10, wherein
the control device (30) is configured to update the positional relationship in response to travelling of the tractor (1) of the asphalt finisher (100).

13. The monitoring system of the asphalt finisher (100) according to claim 10, wherein
the control device (30) senses a location of the obstacle (300) before the paving material truck (200) enters within a predetermined distance.

## Patentansprüche

1. Asphaltfertiger (100), umfassend:
eine Alarmvorrichtung (60, 63); und
eine Informationserfassungsvorrichtung (62), zur Erfassung von Informationen über ein Objekt, das sich in einem Umgebungsbereich eines Körpers des Asphaltfertigers (100) befindet; und
eine Steuervorrichtung (30) zur Steuerung der Alarmvorrichtung (60, 63) basierend auf den von der Informationserfassungsvorrichtung (62) erfassten Informationen über das Objekt, wobei
die Steuervorrichtung (30) konfiguriert ist, ein Hindernis (300) zu erfassen, das sich in einer Fahrtrichtung des Körpers an einer Position befindet, die höher als eine vorbestimmte Höhe ist, einen Straßendeckenmateriallastwagen (200) zu erfassen, der sich in der Fahrtrichtung des Körpers befindet, und die Alarmvorrichtung (60, 63) basierend auf einer Positionsbeziehung zwischen dem Hindernis (300) und dem Straßendeckenmateriallastwagen (200) zu steuern.

2. Asphaltfertiger (100) nach Anspruch 1, wobei
die Steuervorrichtung (30) konfiguriert ist, in einem Fall, in dem sich der Straßendeckenmateriallastwagen (200) unmittelbar unter dem Hindernis (300) befindet, einen Alarm von der Alarmvorrichtung (60, 63) auszugeben.

3. Asphaltfertiger (100) nach Anspruch 1, wobei
die Steuervorrichtung (30) konfiguriert ist, die Positionsbeziehung in Reaktion auf die Bewegung des Traktors (1) des Asphaltfertigers (100) zu aktualisieren.

4. Asphaltfertiger (100) nach Anspruch 1, wobei
die Steuervorrichtung (30) einen Ort des Hindernisses (300) spezifiziert, bevor der Straßendeckenmateriallastwagen (200) in einer vorbestimmten Entfernung einfährt.

5. Asphaltfertiger (100) nach Anspruch 1, wobei
die Steuervorrichtung (30) einen Typ des Hindernisses (300) spezifiziert.

6. Asphaltfertiger (100) nach Anspruch 1, wobei
die Steuervorrichtung (30) einen Typ des Straßendeckenmateriallastwagens (200) spezifiziert und eine Höhe der Ladefläche des Straßendeckenmateriallastwagens (200) ableitet, wenn die Ladefläche kippt.

7. Asphaltfertiger (100) nach Anspruch 6, wobei
die Steuervorrichtung (30) eine Referenztabelle speichert, die eine entsprechende Beziehung zwischen einem Typ des Straßendeckenmateriallastwagens (200) und einer Höhe der Ladefläche beim Kippen der Ladefläche definiert.

8. Asphaltfertiger (100) nach Anspruch 1, wobei
eine Steuervorrichtung (30) eine Höhe des Hindernisses (300) auf der Grundlage einer Straßenoberflächenhöhe an einer Position des Hindernisses (300) berechnet, die von der Informationserfassungsvorrichtung (62) erfasst wurde.

9. Asphaltfertiger (100) nach Anspruch 1, wobei
die Steuervorrichtung (30) auf der Grundlage einer von der Informationserfassungsvorrichtung (62) erfassten Straßenoberflächenhöhe eine Höhe des Straßendeckenmateriallastwagens (200) an einer Position des Straßendeckenmateriallastwagens (200) berechnet.

10. Überwachungssystem eines Asphaltfertigers (100), umfassend:
eine Alarmvorrichtung (60, 63); und
eine Informationserfassungsvorrichtung (62) zur Erfassung von Informationen über ein Objekt, das sich in einem Umgebungsbereich eines Körpers des Asphaltfertigers (100) befindet; und
eine Steuervorrichtung (30) zur Steuerung der Alarmvorrichtung (60, 63) basierend auf den von der Informationserfassungsvorrichtung (62) erfassten Informationen über das Objekt, wobei
die Steuervorrichtung (30) konfiguriert ist, ein Hindernis (300) zu erfassen, das sich in einer Fahrtrichtung des Körpers an einer Position befindet, die höher als eine vorbestimmte Höhe ist, einen in der Fahrtrichtung des Körpers befindlichen Straßendeckenmateriallastwagen (200) zu erfassen, und
die Alarmvorrichtung (60, 63) auf der Grundlage einer Positionsbeziehung zwischen dem Hindernis (300) und dem Straßendeckenmateriallastwagen (200) zu steuern.

11. Überwachungssystem des Asphaltfertigers (100) nach Anspruch 10, wobei
die Steuervorrichtung (30) konfiguriert ist, einen Alarm von der Alarmvorrichtung (60, 63) auszugeben, wenn sich der Straßendeckenmateriallastwagen (200) unmittelbar unterhalb des Hindernisses (300) befindet.

12. Überwachungssystem des Asphaltfertigers (100) nach Anspruch 10, wobei
die Steuervorrichtung (30) konfiguriert ist, die Positionsbeziehung in Reaktion auf die Fahrt des Traktors (1) des Asphaltfertigers (100) zu aktualisieren.

13. Überwachungssystem des Asphaltfertigers (100) nach Anspruch 10, wobei
die Steuervorrichtung (30) einen Ort des Hindernisses (300) erfasst, bevor der Straßendeckenmateriallastwagen (200) innerhalb eines vorbestimmten Abstands einfährt.

## Revendications

1. Un finisseur d'asphalte (100) comprenant :
un dispositif d'alarme (60, 63) ; et
un dispositif d'acquisition d'informations (62) pour acquérir des informations sur un objet qui est présent dans un environnement d'un châssis du finisseur d'asphalte (100) ; et
un dispositif de commande (30) pour contrôler le dispositif d'alarme (60, 63) sur la base des informations sur l'objet acquises par le dispositif d'acquisition d'informations (62), dans lequel
le dispositif de commande (30) est configuré pour détecter un obstacle (300) qui se trouve dans une direction de déplacement du châssis à un emplacement situé plus haut qu'une hauteur prédéterminée, pour détecter un camion de matériaux routiers (200) qui se trouve dans la direction de déplacement du châssis, et pour contrôler le dispositif d'alarme (60, 63) sur la base d'une relation de position entre l'obstacle (300) et le camion de matériaux routiers (200).

2. Le finisseur d'asphalte (100) selon la revendication 1, dans lequel
le dispositif de commande (30) est configuré pour émettre une alarme depuis le dispositif d'alarme (60, 63) lorsque le camion de matériaux routiers (200) se trouve juste en-dessous de l'obstacle (300).

3. Le finisseur d'asphalte (100) selon la revendication 1, dans lequel
le dispositif de commande (30) est configuré pour mettre à jour la relation de position en réponse au déplacement du tracteur (1) du finisseur d'asphalte (100).

4. Le finisseur d'asphalte (100) selon la revendication 1, dans lequel
le dispositif de commande (30) spécifie un emplacement de l'obstacle (300) avant que le camion de matériaux routiers (200) ne pénètre sur une distance prédéterminée.

5. Le finisseur d'asphalte (100) selon la revendication 1, dans lequel
le dispositif de commande (30) spécifie un type d'obstacle (300).

6. Le finisseur d'asphalte (100) selon la revendication 1, dans lequel
le dispositif de commande (30) spécifie un type de camion de matériaux routiers (200) et dérive une hauteur de la plate-forme de chargement du camion de matériaux routiers (200) lorsque la plate-forme de chargement s'incline.

7. Le finisseur d'asphalte (100) selon la revendication 6, dans lequel
le dispositif de commande (30) stocke un tableau de référence qui définit une relation correspondante entre un type du camion de matériaux routiers (200) et une hauteur de la plate-forme de chargement lorsque la plate-forme de chargement s'incline.

8. Le finisseur d'asphalte (100) selon la revendication 1, dans lequel
un dispositif de commande (30) calcule une hauteur de l'obstacle (300) sur la base d'une hauteur de surface de la route à un emplacement de l'obstacle (300) acquis par le dispositif d'acquisition d'informations (62).

9. Le finisseur d'asphalte (100) selon la revendication 1, dans lequel
le dispositif de commande (30) calcule une hauteur du camion de matériaux routiers (200) sur la base d'une hauteur de surface de la route à un emplacement du camion de matériaux routiers (200) acquis par le dispositif d'acquisition d'informations (62).

10. Un système de surveillance d'un finisseur d'asphalte (100) comprenant :
un dispositif d'alarme (60, 63) ; et
un dispositif d'acquisition d'informations (62) pour acquérir des informations sur un objet qui est présent dans l'environnement d'un châssis du finisseur d'asphalte (100) ; et
un dispositif de commande (30) pour contrôler le dispositif d'alarme (60, 63) sur la base des informations sur l'objet acquises par le dispositif d'acquisition d'informations (62), dans lequel
le dispositif de commande (30) est configuré pour détecter un obstacle (300) qui se trouve dans une direction de déplacement du châssis à un emplacement situé plus haut qu'une hauteur prédéterminée, pour détecter un camion de matériaux routiers (200) qui se trouve dans la direction de déplacement du châssis, et pour contrôler le dispositif d'alarme (60, 63) sur la base d'une relation de position entre l'obstacle (300) et le camion de matériaux routiers (200).

11. Le système de surveillance du finisseur d'asphalte (100) selon la revendication 10, dans lequel
le dispositif de commande (30) est configuré pour émettre une alarme depuis le dispositif d'alarme (60, 63) lorsque le camion de matériaux routiers (200) se trouve juste en-dessous de l'obstacle (300).

12. Le système de surveillance du finisseur d'asphalte (100) selon la revendication 10, dans lequel
le dispositif de commande (30) est configuré pour mettre à jour la relation de position en réponse au déplacement du tracteur (1) du finisseur d'asphalte (100).

13. Le système de surveillance du finisseur d'asphalte (100) selon la revendication 10, dans lequel
le dispositif de commande (30) détecte un emplacement de l'obstacle (300) avant que le camion de matériaux routiers (200) ne pénètre sur une distance prédéterminée.
